# EUROPÄISCHE PATENTSCHRIFT

(11) **EP 1 000 971 B1**
(45) Veröffentlichungstag und Bekanntmachung des Hinweises auf die Patenterteilung: **15.10.2003**
(21) Anmeldenummer: 99120967.7
(22) Anmeldetag: 03.11.1999
(51) Int. Cl.: C08L 19/00, C08K 3/00, C08J 3/21

(54) **Carboxylgruppen-haltige Lösungskautschuke enthaltende Kautschukmischungen**
Rubber compositions consisting of solution-polymerised rubber containing carboxyl groups
Compositions de caoutchouc comprenant du caoutchouc polymérisé en solution ayant des groupements carboxyl

(30) Priorität: 16.11.1998 DE 19852648
(43) Veröffentlichungstag der Anmeldung: 17.05.2000
(73) Patentinhaber: Bayer Aktiengesellschaft, 51368 Leverkusen (DE)
(72) Erfinder: Scholl, Thomas, Dr., 51469 Bergisch Gladbach (DE); Trimbach, Jürgen, 50859 Köln (DE)

(56) Entgegenhaltungen:
- DE-A- 2 653 144
- GB-A- 933 749
- GB-A- 1 179 252
- US-A- 4 412 031
- US-A- 5 250 630

## Beschreibung

Die vorliegende Erfindung betrifft Carboxylgruppen-haltige Lösungskautschuke und Füllstoffe enthaltende Kautschukmischungen, die Herstellung solcher Kautschukmischungen sowie deren Verwendung zur Herstellung von Kautschukvulkanisaten, die insbesondere zur Herstellung von hochverstärkten Kautschuk-Formkörpern, besonders bevorzugt zur Herstellung von Reifen dienen, die eine besonders hohe Naßrutschfestigkeit und Abriebbeständigkeit aufweisen.

Doppelbindungshaltige anionisch polymerisierte Lösungskautschuke, wie Lösungs-Polybutadien und Lösungs-Styrol/Butadien-Kautschuke, besitzen gegenüber entsprechenden Emulsionskautschuken Vorteile bei der Herstellung rollwiderstandsarmer Reifenlaufflächen. Die Vorteile liegen u.a. in der Steuerbarkeit des Vinylgehalts und der damit verbundenen Glastemperatur und der Molekülverzweigung. Hieraus ergeben sich in der praktischen Anwendung besondere Vorteile in der Relation von Naßrutschfestigkeit und Rollwiderstand des Reifens. So beschreibt US-PS 5.227.425 die Herstellung von Reifenlaufflächen aus einem Lösungs-SBR-Kautschuk und Kieselsäure. Zur weiteren Verbesserung der Eigenschaften sind zahlreiche Methoden zur Endgruppen-Modifizierung entwickelt worden, wie in EP-A 334 042 beschrieben, mit Dimethylaminopropyl-acrylamid, oder, wie in EP-A 447.066 beschrieben, mit Silylethern. Durch das hohe Molekulargewicht der Kautschuke ist der Gewichtsanteil der Endgruppe jedoch gering und kann daher die Wechselwirkung zwischen Füllstoff und Kautschukmolekül nur wenig beeinflussen. Es war u.a. eine Aufgabe der vorliegenden Erfindung Lösungs-Kautschuke mit einem deutlich höheren Gehalt an wirkungsvollen Gruppen zur Füllstoffwechselwirkung herzustellen.

Ein Verfahren zur Herstellung von Carboxylgruppen-haltigen (3,9 bis 8,9 Gew.-%) Lösungs-Polybutadien-Kautschuken wird u.a. in DE-OS 2.653.144 beschrieben.

Diese Kautschuke eignen sich jedoch wegen ihrer zu geringen Festigkeit und ihren zu geringen Spannungswerten nicht als Hauptkomponente in Reifenlaufflächen.

Aufgabe der vorliegenden Erfindung war es daher, Mischungen Carboxylgruppenhaltiger Lösungskautschuke zu Verfügung zu stellen, aus denen sich Reifen mit verbesserter Naßrutschfestigkeit, niedrigerem Rollwiderstand sowie hoher mechanischer Festigkeit und verbessertem Abriebverhalten herstellen lassen.

Gegenstand der vorliegenden Erfindung sind daher Kautschukmischungen, bestehend aus mindestens einem Kautschuk und 10 bis 500 Gew.-Teilen, bevorzugt 20 bis 200 Gew.-Teilen eines Füllstoffs, bezogen auf 100 Gew.-Teile Kautschuk, wobei der Kautschuk durch Polymerisation von vinylaromatischen Monomeren mit Diolefinen in Lösung und Einführung von Carboxylgruppen hergestellt wurde, dieser Kautschuk 0,1 bis 3 Gew.-% an gebundenen Carboxylgruppen oder deren Salze, einen Gehalt an einpolymerisierten vinylaromatischen Monomeren von 5 bis 40 Gew.-% sowie einen Gehalt an Diolefinen von 60 bis 95 Gew.-% besitzt, und wobei der Gehalt an 1,2-gebundenen Diolefinen (Vinylgehalt) 5 bis 60 Gew.-%, jeweils bezogen auf den eingesetzten Lösungskautschuk, beträgt.

Bevorzugt sind erfindungsgemäße Kautschukmischungen, deren Kautschukbestandteil einen Gehalt an gebundenen Carboxylgruppen oder deren Salzen von 0,2 bis 2,5 Gew.-% besitzt, einen Gehalt an einpolymerisierten vinylaromatischen Monomeren von 5 bis 30 Gew.-% sowie einen Gehalt an Diolefinen von 95 bis 70 Gew.-% hat, wobei der Gehalt an 1,2-gebundenen Diolefinen (Vinylgehalt) im Bereich von 5 bis 55 Gew.-% liegt.

Als vinylaromatische Monomere, die fiir die Polymerisation eingesetzt werden können, seien beispielsweise genannt Styrol, o-, m- und p-Methylstyrol , p-tert.-Butylstyrol, α-Methylstyrol, Vinylnaphthalin, Divinylbenzol, Trivinylbenzol und/oder Divinylnaphthalin. Besonders bevorzugt wird Styrol eingesetzt.

Als Diolefine dienen erfindungsgemäß zur Polymerisation 1,3-Butadien, Isopren, 1,3-Pentadien, 2,3-Dimethylbutadien, 1-Phenyl-1,3-Butadien und/oder 1,3-Hexadien. Besonders bevorzugt werden 1,3-Butadien und Isopren eingesetzt.

Die erfindungsgemäß in die Kautschukmischungen einzusetzenden Kautschuke auf Basis von vinylaromatischen Monomeren und Diolefinen mit einem Gehalt von 0,1 bis 3 Gew.-% gebundenen Carboxylgruppen besitzen mittlere Molgewichte (Zahlenmittel) von 50.000 bis 2.000.000, bevorzugt 100.000 bis 1.000.000, und Glastemperaturen von -50°C bis +20°C, bevorzugt -40°C bis 0°C, sowie Mooney-Viskositäten ML 1+4 (100°C) von 10 bis 200, vorzugsweise 30 bis 150.

Neben den Carbonsäuregruppen bzw. deren Salze können die erfindungsgemäßen Kautschuke auch weitere bekannte funktionelle Gruppen, wie Hydroxyl-, Carbonsäureester-, Carbonsäureamid- oder Sulfonsäuregruppen tragen.

Die Herstellung der erfindungsgemäß einzusetzenden Kautschuke erfolgt durch anionische Lösungspolymerisation, d.h. mittels eines Katalysators auf Alkalimetallbasis, z.B. n-Butyllithium, in einem inerten Kohlenwasserstoff als Lösungsmittel. Zusätzlich können die bekannten Randomizer und Kontrollagentien für die Mikrostruktur des Polymers verwendet werden. Derartige anionische Lösungspolymerisationen sind bekannt und z.B. in I. Franta Elastomers and Rubber Compounding Materials; Elsevier 1989, Seite 73-74, 92-94 und in Houben-Weyl, Methoden der Organische Chemie, Thieme Verlag, Stuttgart, 1987, Band E 20, Seite 114 - 134 beschrieben.

Die Carboxylgruppen können in den Kautschuk eingeführt werden dadurch, daß man entweder metallierten Lösungskautschuken Carboxyl-liefernde Verbindungen, beispielsweise CO₂, zusetzt oder indem man in einer nachgeschalteten Reaktion den fertigen Kautschuk mit Carboxylgruppen-haltigen Verbindungen, beispielsweise Carboxylgruppen-haltigen Mercaptanen behandelt.

Die Bestimmung des Carboxylgruppengehalts kann nach bekannten Methoden, wie z.B. Titration der freien Säure, Spektroskopie oder Elementaranalyse erfolgen.

Bevorzugt erfolgt die Einführung der Carboxylgruppen in den Kautschuk nach erfolgter Polymerisation der eingesetzten Monomere in Lösung durch Umsetzung der erhaltenen Polymerisate, gegebenenfalls in Gegenwart von Radikalstartern, mit Carboxylmercaptanen der Formel

HS - R¹-COOX,

worin
- R¹: für eine lineare, verzweigte oder cyclische C₁-C₃₆ Alkylengruppe steht, die gegebenenfalls mit bis zu 3 weiteren Carboxylgruppen substituiert sein kann, oder durch Stickstoff-, Sauerstoff oder Schwefelatome unterbrochen sein kann, und
- X: für Wasserstoff oder für ein Metall- oder ein, gegebenenfalls mit C₁- C₃₆-Alkyl-, Cycloalkyl- oder Arylgruppen substituiertes Ammoniumion steht.

Bevorzugte Carboxylmercaptane sind Thioglykolsäure, 2-Mercaptopropionsäure (Thiomilchsäure), 3-Mercaptopropionsäure, 4-Mercaptobuttersäure, Mercaptoundecansäure, Mercaptooctadecansäure, 2-Mercaptobernsteinsäure sowie deren Alkaliund Erdalkali oder Ammoniumsalze. Besonders bevorzugt werden 2- und 3-Mercaptopropionsäure, Mercaptobuttersäure und 2-Mercaptobernsteinsäure sowie deren Lithium, Natrium, Kalium, Magnesium, Calcium oder Ammoniumsalze eingesetzt. Ganz besonders bevorzugt wird 3-Mercaptopropionsäure sowie deren Lithium, Natrium, Kalium, Magnesium, Calcium oder Ammonium-, Ethylammonium-, Diethylammonium-, Triethylammonium, Stearylammonium- und Cyclohexylammoniumsalze.

Im allgemeinen führt man die Reaktion der Carboxylmercaptane mit den Lösungskautschuken in einem Lösungsmittel, beispielsweise Kohlenwasserstoffen, wie Pentan, Hexan, Cyclohexan, Benzol und/oder Toluol, durch bei Temperaturen von 40 bis 150°C in Gegenwart von Radikalstartern, z.B. Peroxiden, insbesondere Acylperoxiden, wie Dilauroylperoxid und Dibenzoylperoxid, und Ketalperoxiden, wie Di-tert. butylperoxi-trimethylcyclohexan, ferner Azoinitiatoren, wie Azobisisobutyronitril, Benzpinakolsilylethern oder in Gegenwart von Photoinitiatoren und sichtbarem oder UV-Licht.

Die Menge an einzusetzenden Carboxylmercaptanen richtet sich nach dem gewünschten Gehalt an gebundenen Carboxylgruppen oder deren Salzen in dem in die Kautschukmischungen einzusetzenden Lösungskautschuk.

Die Carbonsäuresalze können auch nach der Einführung der Carbonsäuregruppe in den Kautschuk durch deren Neutralisation hergestellt werden.

Als Füllstoffe kommen fiir die erfindungsgemäßen Kautschukmischungen alle bekannten in der Kautschukindustrie verwendeten Füllstoffe in Betracht, diese umfassend sowohl aktive als auch inaktive Füllstoffe.

Zu erwähnen sind:
- hochdisperse Kieselsäuren, hergestellt z.B. durch Fällung von Lösungen von Silikaten oder Flammenhydrolyse von Siliciumhalogeniden mit spezifischen Oberflächen von 5 - 1000, vorzugsweise 20-400 m2/g (BET-Oberfläche) und mit Primärteilchengrößen von 10-400 nm. Die Kieselsäuren können gegebenenfalls auch als Mischoxide mit anderen Metalloxiden, wie Al-, Mg-, Ca-, Ba-, Zn-, Zr-,Ti-oxiden vorliegen;
- synthetische Silikate, wie Aluminiumsilikat, Erdalkaisilikat wie Magnesiumsilikat oder Calciumsilikat, mit BET-Oberflächen von 20-400 m2/g und Primärteilchendurchmessern von 10-400 nm;
- natürliche Silikate, wie Kaolin und andere natürlich vorkommende Kieselsäure;
- Glasfasern und Glasfaserprodukte (Matten, Stränge) oder Mikroglaskugeln;
- Metalloxide, wie Zinkoxid, Calciumoxid, Magnesiumoxid, Aluminiumoxid;
- Metallcarbonate, wie Magnesiumcarbonat, Calciumcarbonat, Zinkcarbonat;
- Metallhydroxide, wie z.B. Aluminiumhydroxid, Magnesiumhydroxid;
- Ruße. Die hierbei zu verwendenen Russe sind nach dem Flammruß, Furnaceoder Gasrußverfahren hergestellt und besitzen BET-Oberflächen von 20-200m2/g, z.B. SAF-, ISAF-, HAF-, FEF- oder GPF-Ruße;
- Kautschukgele, insbesondere solche auf Basis Polybutadien, Butadien/Styrol-Copolymere, Butadien/Acrylnitril-Copolymere und Polychloropren.

Bevorzugt werden als Füllstoffe eingesetzt hochdisperse Kieselsäuren und/oder Ruße.

Die genannten Füllstoffe können alleine oder im Gemisch eingesetzt werden. In einer besonders bevorzugten Ausführungsform enthalten die Kautschukmischungen als Füllstoffe ein Gemisch aus hellen Füllstoffen , wie hochdispersen Kieselsäuren, und Russen, wobei das Mischungsverhältnis von hellen Füllstoffen zu Russen bei 0,05 bis 20 bevorzugt 0,1 bis 10 liegt.

Die erfindungsgemäßen Kautschukmischungen können neben den erwähnten Carboxylgruppen-haltigen Lösungskautschuken noch andere Kautschuke enthalten, wie Naturkautschuk als auch andere Synthesekautschuke.

Bevorzugte Synthesekautschuke sind beispielsweise bei W. Hofmann, Kautschuktechnologie, Gentner Verlag, Stuttgart 1980 und I. Franta, Elastomers and Rubber Coumpounding Materials, Elsevier, Amsterdam 1989 beschrieben. Sie umfassen u.a.
- BR -: Polybutadien
- ABR -: Butadien/Acrylsäure-C1-4-alkylester-Copolymere
- CR: Polychloropren
- IR -: Polyisopren
- SBR -: Styrol/Butadien-Copolymerisate mit Styrolgehalten von 1-60, vorzugsweise 20-50 Gew. %
- IIR -: Isobutylen/Isopren-Copolymerisate
- NBR -: Butadien/Acrylnitril-Copolmere mit Acrylnitrilgehalten von 5-60, vorzugsweise 10-40 Gew. %
- HNBR -: teilhydrierter oder volllständig hydrierter NBR-Kautschuk
- EPDM -: Ethylen/Propylen/Dien-Copolymerisate

sowie Mischungen dieser Kautschuke. Für die Herstellung von Kfz-Reifen, die oberflächenmodifizierte Füllstoffe enthalten, sind insbesondere Naturkautschuk, Emulsions-SBR sowie Lösungs-SBR-Kautschuke mit einer Glastemperatur oberhalb von -50°C, die gegebenenfalls mit Silylethern oder anderen funktionellen Gruppen nach EP-A 447.066 modifiziert sein können, Polybutadienkautschuk mit hohem 1,4-cis-Gehalt (>90 %), der mit Katalysatoren auf Basis Ni, Co, Ti oder Nd hergestellt wurde, sowie Polybutadienkautschuk mit einem Vinylgehalt von bis zu 75 % sowie deren Mischungen von Interesse.

Selbstverständlich können die erfindungsgemäßen Kautschukmischungen noch andere Kautschukhilfsmittel enthalten, die beispielsweise der Vernetzung der aus den Kautschukmischungen hergestellten Vulkanisate dienen, oder die die physikalischen Eigenschaften der aus den erfindungsgemäßen Kautschukmischungen hergestellten Vulkanisate für deren speziellen Einsatzzweck verbessern.

Als Vernetzeragentien werden insbesondere Schwefel oder Schwefel-liefernde Verbindungen eingesetzt. Darüber hinaus können, wie erwähnt, die erfindungsgemäßen Kautschukmischungen weitere Hilfsmittel, wie die bekannten Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, enthalten.

Die erfindungsgemäßen Kautschukhilfsmittel werden in den üblichen, bekannten Mengen eingesetzt, wobei sich die eingesetzte Menge nach dem späteren Verwendungszweck der Kautschukmischungen richtet. Üblich sind beispielsweise Mengen an Kautschukhilfsmitteln im Bereich von 2 bis 70 Gew.-Teilen, bezogen auf 100 Gew.-Teile Kautschuk.

Wie zuvor erwähnt, können den erfindungsgemäßen Kautschukmischungen neben dem Carboxylgruppen-haltigen Lösungskautschuk noch zusätzliche Kautschuke zugemischt werden. Deren Menge liegt üblicherweise im Bereich von 0,5 bis 70, bevorzugt 10 bis 50 Gew.-%, bezogen auf die gesamte Kautschukmenge in der Kautschukmischung. Die Menge an zusätzlich zugegebenen Kautschuken richtet sich wieder nach dem jeweiligen Verwendungszweck der erfindungsgemäßen Kautschukmischungen.

Für die erfindungsgemäßen Kautschukmischungen, die mit hochaktiven Kieselsäuren gefüllt sind, ist die Verwendung von zusätzlichen Füllstoffaktivatoren besonders vorteilhaft. Bevorzugte Füllstoffaktivatoren sind schwefelhaltige Silylether, insbesondere Bis-(trialkoxisilyl-alkyl)-polysulfide, wie sie in DE 2.141.159 und DE 2.255.577 beschrieben sind. Darüber hinaus kommen in Frage oligomere und/oder polymere schwefelhaltige Silylether entsprechend der Beschreibung in DE 4.435.311 und EP 670.347. Außerdem sind einzusetzen Mercapatoalkyltrialkoxisilane, insbesondere Mercaptopropyltriethoxisilan und Thiocyanatoalkylsilylether (siehe DE 19.544.469) sowie aminogruppenhaltige Silylether, wie z.B. 3-Aminopropyltriethoxisilan und N-Oleyl-N-propyltrimethoxisilan. Die Füllstoffaktivatoren werden in üblichen Mengen eingesetzt, d.h. in Mengen von 0,1 bis 15 Gew.-Teile, bezogen auf 100 Gew.-Teile Kautschuk.

Die erfindungsgemäßen Kautschukmischungen können z.B. hergestellt werden durch Abmischung der Carboxylgruppen-haltigen Lösungskautschuke mit den entsprechenden Füllstoffen in geeigneten Mischapparaturen, wie Knetern, Walzen oder Extrudern.

Bevorzugt werden die erfindungsgemäßen Kautschukmischungen hergestellt, indem man zunächst die Polymerisation der genannten Monomeren in Lösung vornimmt, die Carboxylgruppen in den Lösungskautschuk einführt und nach Beendigung der Polymerisation und der Einführung der Carboxylgruppen den im entsprechenden Lösungsmittel vorliegenden Lösungskautschuk mit den entsprechenden Füllstoffen und gegebenenfalls weiteren Kautschuken und weiteren Kautschukhilfsmitteln in den entsprechenden Mengen vermischt und während oder nach dem Mischvorgang das Lösungsmittel mit heißem Wasser und/oder Wasserdampf bei Temperaturen von 50 bis 200°C, gegebenenfalls unter Vakuum, entfernt. Bevorzugt werden auf diese Weise kieselsäure-, silikat- und/oder rußgefüllte Mischungen der carboxylgruppenhaltigen Kautschuke hergestellt, mit Gehalten an Füllstoff zwischen 10 und 150 Gew.-Teilen bezogen auf 100 Gew.-Teile Kautschuk.

Ein weiterer Gegenstand der vorliegenden Erfindung ist die Verwendung der erfindungsgemäßen Kautschukmischungen zur Herstellung von Vulkanisaten, die wiederum fiir die Herstellung von hochverstärkten Kautschuk-Formkörpern, insbesondere für die Herstellung von Reifen, dienen.

### Beispiele

### Beispiel 1

Eine Lösung von 45 kg Lösungs-SBR-Kautschuk Buny VSL VP KA 8808 (Bayer AG, Gehalt an gebundenem Styrol 20 Gew.-%, Gehalt an 1,2-gebundenem Butadien 50 Gew.-%) in 275 kg Cyclohexan wurde bei 80°C mit 0,563 kg 3-Mercaptopropionsäure und 0,045 kg Dilauroylperoxid, gelöst in 1,1 kg Cyclohexan, versetzt. Anschließend rührte man 2 Stunden bei 80°C nach. Dann setzte man 0,23 kg Stabilisator Vulkanox® 4020 (Bayer AG) und 17,12 kg aromatisches Mineralöl Mobilsol K (Mobil) hinzu und destillierte das Lösungsmittel mit Wasserdampf ab. Nach dem Trocknen bei 70°C im Vakuum erhielt man einen mit 37,5 phr Mineralöl verstreckten carboxylierten Kautschuk mit der Mooneyviskosität ML 1+4 (100°C) 38. Carboxyl-Gehalt: 0,5 Gew.-% (bezogen auf Kautschuk).

### Beispiel 2

Eine Lösung von 500 g Lösungs-SBR-Kautschuk, Buna VSL 5025-0 (Bayer AG, Gehalt an gebundenem Styrol 25 Gew. %, Gehalt an 1.2-gebundenem Butadien 50 Gew. %) in 4 Cyclohexan wurde bei 80°C mit 6,25 g 3-Mercaptopropionsäure und 0,25 g Dilauroylperoxid versetzt. Anschließend rührte man 5 Stunden bei 80°C nach. Dann setzte man 2,5 g Stabilisator Vulkanox® 4020 (Bayer AG) hinzu und destillierte das Lösungsmittel mit Wasserdampf ab. Nach dem Trocknen bei 70°C im Vakuum erhielt man 508 g eines farblosen Kautschuks mit der Mooneyviskosität ML 1+4 (100°C) 65. Carboxyl-Gehalt: 0,5 Gew. %.

### Beispiele 3 - 7:

Es wurde wie in Beispiel 2 verfahren, wobei folgende Mercaptane zum Einsatz kamen:

| ***Bsp.*** | ***Buna VSL 5025-0*** | ***Carboxylmercaptan*** | ***Radikalstarter*** | ***ML 1+4*** | ***Carboxyl-Gehalt im Endprodukt*** |
|---|---|---|---|---|---|
| **2** | 500 g | 3,2 g 3-Mercaptopropionsäure | 0,25 g Dilauroylperoxid | 61 | 0,27 Gew. % |
| **3** | 500 g | 12,5 g 3-Mercaptopropionsäure | 0,5 g Dilauroylperoxid | 81 | 1,1 Gew. % |
| **4** | 500 g | 25 g 3-Mercaptopropionsäure | 0,5 g Dilauroylperoxid | 103 | 2,1 Gew. % |
| **5** | 500 g | 25 g 2-Mercaptopropionsäure | 1,5 g Dilauroylperoxid | 107 | 2,1 Gew. % |
| **6** | 500 g | 12,5 g 2-Mercaptobernsteinsäure | 1 g Dilauroylperoxid | 85 | 1,5 Gew. % |

### Beispiel 8

### Lösungs-SBR-Kautschuk mit Amminiumcarboxylat-Gruppen

Eine Lösung von 500 g Lösungs-SBR-Kautschuk, Buna VSL 5025-0 (Bayer AG, Gehalt an gebundenem Styrol 25 Gew. %, Gehalt an 1.2-gebundenem Butadien 50 Gew. %) in 4 Cyclohexan wurde bei 80°C mit 6,25 g 3-Mercaptopropionsäure und 0,5 g Dilauroylperoxid versetzt. Anschließend rührte man 2 Stunden bei 80°C nach. Dann setzte man 2,5 g Stabilisator Vulkanox® 4020 (Bayer AG) sowie 6,94 g einer 26 %igen wässrigen Ammoniak-Lösung hinzu, rührte 10 Minuten bei 45° C nach und destillierte das Lösungsmittel mit Wasserdampf ab. Nach dem Trocknen bei 70°C im Vakuum erhielt man 508 g eines farblosen Kautschuks mit der Mooneyviskosität ML 1+4 (100°C) 116. Carboxylgehalt: 0,5 Gew. %, wobei die Carbonsäuregruppen als Ammoniumsalze vorliegen.

### Vergleichsbeispiel 9:

### Herstellung eines entsprecheneden carboxylierten Emulsions-SBR:

Nach dem Verfahren aus Beispiel 2 wurde eine Lösung von 500 g Emuslions-SBR Krylene 1502 (Bayer AG, Emulsions-SBR mit 23,5 Gew. % einpolymerisiertem Styrol) in 4 l Cyclohexan bei 80° C mit 6,25 g 3-Mercaptpropionsäure vesetzt. Dann setzte man im Abstand von 2 Stunden dreimal jeweils 0,5 g Dilauroylperoxid hinzu. Die gesamte Reaktionsdauer betrug 8 Stunden. Anschließend wurden 2,5 g Vulkanox 4020 (Bayer AG) zugegeben und das Lösungsmittel mit Wasserdampf abdestilliert. Das resultierende Emulsions-SBR besaß einen Carboxylgruppengehalt von 0,4 Gew. %. Viskosität ML 1+4 (100° C): 114.

### Beispiel 10:

### Herstellung eines Masterbatches aus gefällter Kieselsäure und Carboxylgruppen-haltigem Lösungs-SBR-Kautschuk:

Nach dem Verfahren von Beispiel 2 setzte man 500 g Lösungs-SBR-Kautschuk Buna VSL 5025-0 in 4 1 Cyclohexan bei 80°C mit 6,25 g 3-Mercaptopropionsäure und 0,25 g Dilauroylperoxid um. Reaktionsdauer: 5 Stunden. Dann setzte man unter Rühren bei 75°C 2,5 g Stabilisator Vulkanox® 4020 (Bayer AG), 189,5 g aromatisches Mineralöl Renopal® 450 (Fuchs Mineralölwerke) und 405 g hochaktive gefällte Kieselsäure Vulkasil® S (N₂-Oberfläche ca. 180 m²/g, Bayer AG) hinzu und rührte bis zur gleichmäßigen Verteilung bei dieser Temperatur ca. 30 Minuten nach. Anschließend wurde das Lösungsmittel durch Einleiten von Wasserdampf entfernt. Dabei wurde das Reaktionsgefäß von außen bei 75 - 80°C beheizt.. Im Anschluß daran wurde der feuchte Feststoff entnommen und über ein Sieb von feinteiliger Kieselsäure abfiltriert und dann bei 65° C im Vakuum getrocknet. Man erhielt 1095 g eines braunen Kieselsäure/Kautschuk-Masterbatches (99,2 % der Theorie). Das Abwasser war frei von Kieselsäure.

### Vergleichsbeispiel 10.a:

Es wurde wie in Beispiel 8 verfahren, wobei eine Lösung von 500 g Lösungs-SBR-Kautschuk Buna VSL 5025-0 und 2,5 g Vulkanox® 4020 in 4 Cyclohexan bei 75°C mit 400 g hochaktiver gefällter Kieselsäure Vulkasil® S gemischt wurde. Anschließend entfernte man das Lösungsmittel durch Einleiten von Wasserdampf, wobei das Reaktionsgefäß von außen mit 75-80°C beheizt wurde. Im Anschluß daran wurde der feuchte Feststoff entnommen und über ein Sieb von feinteiliger Kieselsäure abfiltriert und dann bei 65°C im Vakuum getrocknet. Man erhielt 596 g (66 % d. Theorie) eines inhomogenen Kieselsäure/Kautschuk-Masterbatches. Das Abwasser enthielt große Mengen (ca. 75 % der eingesetzten Menge) Kieselsäure.

### Beispiel 11:

Die folgenden Substanzen wurden in einem 1,5 1 Kneter (Drehzahl 60 UpM, Füllgrad 65 %, Starttemperatur 70°C, Dauer: 5 Minuten) gemischt. Anschließend wurden die Mischungen entnommen und Schwefel und Beschleuniger auf einer Walze bei 40°C Walzentemperatur zugemischt:

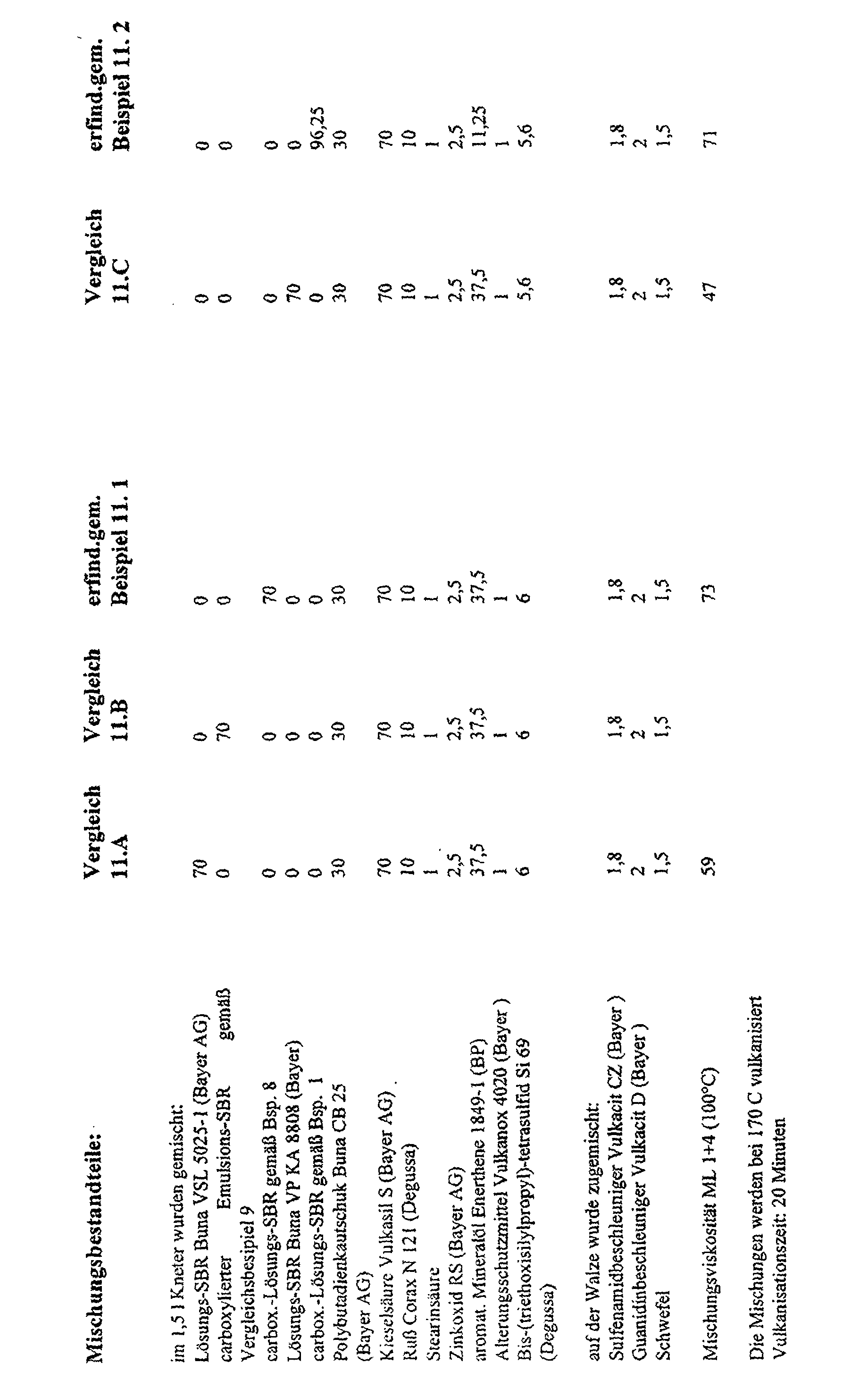

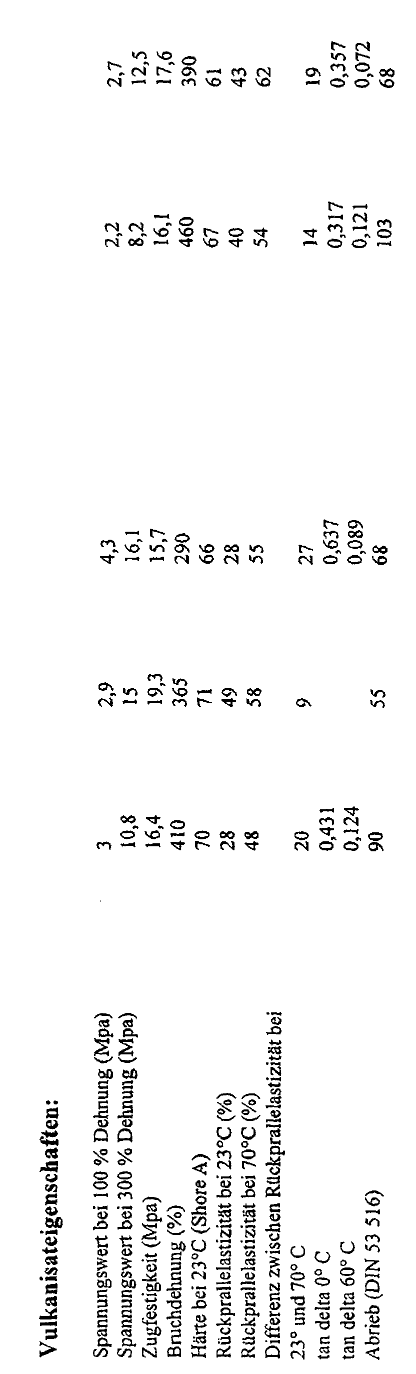

Die Prüfergebnisse belegen das deutlich überlegene dynamische Dämpfimgsverhalten (höhere Dämpfung bei 0°C für bessere Naßrutschfestigkeit, geringere dynamische Dämpfung bei 60°C für geringeren Rollwiderstand von Kfz-Reifen, gemessen als Rückprallelastizität) gegenüber dem unmodifizierten Lösungs-SBR und insbesondere gegenüber carboxylierten Emulsions-SBR-Kautschuk sowie das verbesserte Abriebverhalten gegenüber dem unmodifizierten Lösungskautschuk.

### Beispiel 12:

Die folgenden Substanzen wurden in einem 1,5 1 Kneter (Drehzahl 60 UpM, Füllgrad 65 %, Starttemperatur 70°C, Dauer: 5 Minuten) gemischt. Anschließend wurden die Mischungen entnommen und Schwefel und Beschleuniger auf einer Walze bei 40°C Walzentemperatur zugemischt:

| **Mischungsbestandteile:** | **Vergleich 12.A** | **Beispiel 12.1** | **Beispiel 12.2** |
|---|---|---|---|
| im 1,5 l Kneter wurden gemischt: | | | |
| Lösungs-SBR Buna VSL 5025-1 (Bayer AG) | 60 | 0 | 0 |
| carbox.-Lösungs-SBR gemäß Bsp. 2 | 0 | 60 | 0 |
| carbox.-Lösungs-SBR gemäß Bsp. 3 | 0 | 0 | 60 |
| Polybutadienkautschuk Buna CB 25 (Bayer AG) | 40 | 40 | 40 |
| Kieselsäure Vulkasil S (Bayer AG) | 70 | 70 | 70 |
| Ruß Corax N 121 (Degussa) | 10 | 10 | 10 |
| Stearinsäure | 1 | 1 | 1 |
| Zinkoxid RS (Bayer AG) | 2,5 | 2,5 | 2,5 |
| aromat. Mineralöl Enerthene 1849-1 (BP) | 37,5 | 37,5 | 37,5 |
| Alterungsschutzmittel Vulkanox 4020 (Bayer) | 1 | 1 | 1 |
| Bis-(triethoxisilylpropyl)-tetrasulfid Si 69 (Degussa) | 6 | 6 | 6 |

| auf der Walze wurde zugemischt: | | | |
|---|---|---|---|
| Sulfenamidbeschleuniger Vulkacit CZ (Bayer) | 1,8 | 1,8 | 1,8 |
| Guanidinbeschleuniger Vulkacit D (Bayer) | 2 | 2 | 2 |
| Schwefel | 1,5 | 1,5 | 1,5 |
| Mischungsviskosität ML 1+4 (100°C) | 49 | 68 | 63 |
| die Mischungen wurden anschließend bei 170°C vulkanisiert. | | | |
| Vulkanisationszeiten: | 20 | 20 | 20 Min. |

| **Vulkanisateigenschaften:** | | | |
|---|---|---|---|
| Spannungswert bei 100 % Dehnung (Mpa) | 2,8 | 3,7 | 2,9 |
| Spannungswert bei 300 % Dehnung (Mpa) | 10,8 | 14,4 | 12,7 |
| Zugfestigkeit (Mpa) | 15,6 | 16,8 | 18,3 |
| Bruchdehnung (%) | 390 | 340 | 390 |
| Härte bei 23°C (Shore A) | 69 | 68 | 66 |
| Rückprallelastizität bei 23°C (%) | 35 | 33 | 34 |
| Rückprallelastizität bei 70°C (%) | 52 | 55 | 55 |
| Differenz zwischen den Rückprallelastizitäten bei 23° und 70° C | 17 | 22 | 21 |
| Abrieb (DIN 53 516) | 68 | 52 | 58 |

Die Prüfergebnisse belegen das verbesserte mechanische Eigenschaftsniveau der erfindungsgemäßen Kautschukmischungen, insbesondere höhere Spannungswerte bei 100% bzw. 300 % Dehnung, höhere Zugfestigkeit, das überlegene dynamische Dämpfungsverhalten (höhere Dämpfung bei 0°C für bessere Naßrutschfestigkeit, geringere dynamische Dämpfung bei 60°C für geringeren Rollwiderstand von Kfz-Reifen, gemessen als Rückprallelastizität) sowie das verbesserte Abriebverhalten.

## Patentansprüche

1. Kautschukmischungen bestehend aus mindestens einem Kautschuk und 10 bis 500 Gew.-Teilen eines Füllstoffs, bezogen auf 100 Gew.-Teile Kautschuk, wobei der Kautschuk durch Polymerisation von vinylaromatischen Monomeren mit Diolefinen in Lösung und Einführung von Carboxylgruppen hergestellt wurde, dieser Kautschuk 0,1 bis 3 Gew.-% an gebundenen Carboxylgruppen oder deren Salzen, einen Gehalt an einpolymerisiertem vinylaromatischen Monomeren von 5 bis 40 Gew. % sowie einen Gehalt an Diolefinen von 60 bis 95 Gew. % besitzt, und wobei der Gehalt an 1,2-gebundenen Diolefinen (Vinylgehalt) 5 bis 60 Gew.-%, jeweils bezogen auf den eingesetzten Lösungskautschuk, beträgt.

2. Kautschukmischungen gemäß Anspruch 1, **dadurch gekennzeichnet, daß** die Kautschukmischungen 20 bis 200 Gew.-Teile eines Füllstoffes, bezogen auf 100 Gew.-Teile an Kautschuk, enthalten.

3. Kautschukmischungen nach Anspruch 1, **dadurch gekennzeichnet, daß** die Kautschuke einen Gehalt an gebundenen Carboxylgruppen oder deren Salze von 0,2 bis 2,5 Gew.-% besitzen.

4. Kautschukmischungen nach Anspruch 1, **dadurch gekennzeichnet, daß** die Kautschuke einen Gehalt an einpolymerisierten vinylaromatischen Monomeren von 5 bis 30 Gew.-% sowie einen Gehalt an Diolefinen von 95 bis 70 Gew.-% besitzen und wobei der Gehalt an 1,2-gebundenen Diolefinen (Vinylgehalt) 5 bis 55 Gew.-% beträgt.

5. Verfahren zur Herstellung der Kautschukmischungen nach Anspruch 1, **dadurch gekennzeichnet, daß** man zunächst die Polymerisation der Monomere des Anspruchs 1 in Lösung vornimmt, die Carboxylgruppen oder deren Salze in den Lösungskautschuk einführt und nach Beendigung der Polymerisation und der Einführung der Carboxylgruppen oder deren Salze den in entsprechenden Lösungsmitteln vorliegenden Lösungskautschuk mit den Füllstoffen in den in Anspruch 1 angegebenen Mengen vermischt und während oder nach dem Mischvorgang das Lösungsmittel mit heißem Wasser und/oder Wasserdampf bei Temperaturen von 50 bis 200°C, gegebenenfalls unter Vakuum, entfernt.

6. Verwendung der Kautschukmischungen nach Anspruch 1 zur Herstellung von hochverstärkten Kautschuk-Formkörpern, insbesondere zur Herstellung von Reifen.

## Claims

1. Rubber compounds consisting of at least one rubber and of 10 to 500 parts by weight of a filler with respect to 100 parts by weight rubber, wherein the rubber has been produced by the polymerisation of aromatic vinyl monomers with diolefines in solution and by the introduction of carboxyl groups, said rubber has a content of 0.1 to 3 % by weight of bound carboxyl groups or salts thereof, a content of aromatic vinyl monomers incorporated by polymerisation of 5 to 40 % by weight, and a content of diolefines of 60 to 95 % by weight, and wherein the content of 1,2-bonded diolefines (vinyl content) is 5 to 60 % by weight, with respect to the solution rubber used in each case.

2. Rubber compounds according to claim 1, **characterised in that** the rubber compounds contain 20 to 200 parts by weight of a filler with respect to 100 parts by weight of rubber.

3. Rubber compounds according to claim 1, **characterised in that** the rubbers have a content of bound carboxyl groups or salts thereof of 0.2 to 2.5 % by weight.

4. Rubber compounds according to claim 1, **characterised in that** the rubbers have a content of aromatic vinyl monomers incorporated by polymerisation of 5 to 30 % by weight and a content of diolefines of 95 to 70 % by weight, wherein the content of 1,2-bonded diolefines (vinyl content) is 5 to 55 % by weight.

5. A process for producing rubber compounds according to claim 1, **characterised in that** polymerisation is first effected of the monomers of claim 1 in solution, the carboxyl groups or salts thereof are introduced into the solution rubber, and after the completion of the polymerisation and of the introduction of the carboxyl groups or salts thereof, the solution rubber, which is present in corresponding solvents, is mixed with the fillers in the amounts given in claim 1 and the solvent is subsequently removed with hot water and/or steam at temperatures of 50 to 200°C, optionally under vacuum.

6. Use of the rubber compounds according to claim 1 for the production of highly reinforced rubber mouldings, particularly for the production of tyres.

## Revendications

1. Mélanges de caoutchoucs constitués d'au moins un caoutchouc et de 10 à 500 parties en poids d'une charge, rapportées à 100 parties en poids de caoutchouc, le caoutchouc ayant été préparé par polymérisation de monomères aromatiques vinyliques avec des dioléfines en solution et par introduction de groupes carboxyle, ce caoutchouc possédant de 0,1 à 3 % en poids de groupes carboxyle liés ou de sels de ceux-ci, une teneur en monomères aromatiques vinyliques introduits par polymérisation de 5 à 40 % en poids ainsi qu'une teneur en dioléfines de 60 à 95 % en poids, et la teneur en dioléfines 1,2-liées (teneur vinylique) étant de 5 à 60 % en poids, rapportés à chaque fois au caoutchouc en solution utilisé.

2. Mélanges de caoutchoucs selon la revendication 1, **caractérisé en ce que** les mélanges de caoutchoucs contiennent de 20 à 200 parties en poids d'une charge rapportées à 100 parties en poids de caoutchouc.

3. Mélanges de caoutchoucs selon la revendication 1, **caractérisés en ce que** les caoutchoucs présentent une teneur en groupes carboxyle liés ou en sels de ceux-ci de 0,2 à 2,5 % en poids.

4. Mélanges de caoutchoucs selon la revendication 1, **caractérisés en ce que** les caoutchoucs présentent une teneur en monomères aromatiques vinyliques introduits par polymérisation de 5 à 30 % en poids ainsi qu'une teneur en dioléfines de 95 à 70 % en poids et la teneur en dioléfines 1,2-liées (teneur vinylique) étant de 5 à 55 % en poids.

5. Procédé pour la préparation des mélanges de caoutchoucs selon la revendication 1, **caractérisé en ce que** l'on procède tout d'abord à la polymérisation en solution des monomères de la revendication 1, on introduit les groupes carboxyle ou les sels de ceux-ci dans le caoutchouc en solution et on mélange, à la fin de la polymérisation et de l'introduction des groupes carboxyle ou des sels de ceux-ci, le caoutchouc en solution présent dans le solvant correspondant avec les charges dans les quantités indiquées dans la revendication 1 et on élimine pendant ou après le processus de mélange le solvant avec de l'eau chaude et/ou de la vapeur d'eau à des températures de 50 à 200°C, éventuellement sous vide. Le A 33 351 (99 120 967.7)

6. Utilisation des mélanges de caoutchoucs selon la revendication 1 pour la préparation de corps moulés en caoutchouc hautement renforcés, en particulier pour la préparation de pneus.
